(19) Europäisches Patentamt
European Patent Office
Office européen des brevets

(11) **EP 4 242 940 A1**

(12) **EUROPEAN PATENT APPLICATION**

(43) Date of publication:
**13.09.2023 Bulletin 2023/37**

(51) International Patent Classification (IPC):
***G06N 20/00*** *(2019.01)*

(21) Application number: **23159854.1**

(52) Cooperative Patent Classification (CPC):
**G06N 20/00**

(22) Date of filing: **03.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022 KR 20220028825**
**23.08.2022 KR 20220105602**

(71) Applicant: **Hyperconnect LLC**
**Seoul 06164 (KR)**

(72) Inventors:
• **KYE, Seong Min**
**06164 Seoul (KR)**
• **CHOI, Kwang Hee**
**06164 Seoul (KR)**
• **CHANG, Bu Ru**
**06164 Seoul (KR)**

(74) Representative: **Zimmermann & Partner**
**Patentanwälte mbB**
**Postfach 330 920**
**80069 München (DE)**

(54) **APPARATUS FOR ACTIVE LEARNING USING TRAINING DYNAMICS AND METHOD THEREOF**

(57) A method for training a training dynamics prediction model (120) comprising acquiring classification information on training data included in a first dataset based on a classification model (110), acquiring target training dynamics information based on the classification information and a set of one or more classification information acquired based on the classification model (110) in one or more previous epochs, acquiring predictive training dynamics information on the training data based on the training dynamics prediction model (120), and training the training dynamics prediction model (120) based on the target training dynamics information and the predictive training dynamics information is disclosed.

FIG. 1

EP 4 242 940 A1

**Description**

CROSS-REFERENCE TO RELATED APPLICATION(S)

This application claims the benefit of Korean Patent Application No. 10-2022-0028825, filed on March 07, 2022, and Korean Patent Application No. 10-2022-0105602, filed on August 23, 2022, in the Korean Intellectual Property Office, the disclosures of which are incorporated herein in their entireties by reference.

BACKGROUND

1. Field of the Invention

Example embodiments, or embodiments of the invention, relate to a training apparatus and a method thereof, and more particularly, to an apparatus for selecting some data from a dataset including one or more data not pre-labeled with a class, acquire a result of labeling the selected data with a corresponding class, and training a model based on the labeling result and a method thereof.

2. Description of the Related Art

Traditional passive machine learning performs machine learning in a way such that a human gives a label to unlabeled data and a model is trained using the label. However, since human labeling on data for model training requires excessive workforce and cost, there was a need for saving these resources.

For this purpose, active machine learning has been proposed. In the case of active machine learning, the machine determines the required data and asks the human to label the data, the goal for which is to allow the model to be effectively trained while relatively saving on workforce and cost. For active machine learning, a key point is how to set up the logic to determine required data for training. For example, the model can be effectively trained by preferentially acquiring labeling results for data with high uncertainty. However, the specific method for inferring the uncertainty of data not yet labeled can be problematic.

Training dynamics may be utilized to infer the uncertainty. However, since the probability of data belonging to each class should be calculated for each epoch, there is a limitation in that an excessive amount of computation is required.

In this regard, reference may be made to prior documents such as KR20210006502A and KR102229853B1.

SUMMARY

An aspect of the present disclosure is to provide an apparatus for training a model and a method thereof which trains a classification model and a training dynamics prediction model based on a first dataset, selects some data from a second dataset using the training dynamics prediction model, acquires a result of labeling the selected data with a corresponding class, and trains the classification model and the training dynamics prediction model based on the result of labeling the selected data with the corresponding class, the first dataset including one or more data pre-labeled with a class and the second dataset including one or more data not pre-labeled with a class.

The technical aspects of the present disclosure are not limited to those mentioned above, and other technical aspects can be inferred from the following example embodiments.

According to an aspect, there is provided a computer-implemented method for training a training dynamics prediction model of a model training system, which includes a classification model and the training dynamics prediction model, the method including acquiring during a current epoch (training cycle), based on the classification model, classification information on training data included in a first dataset, acquiring during the current epoch, based on the classification information and a set of one or more classification information acquired based on the classification model in one or more previous epochs, target training dynamics information, acquiring during the current epoch, based on the training dynamics prediction model, predictive training dynamics information on the training data, and training, based on the target training dynamics information and the predictive training dynamics information, the training dynamics prediction model. The method may include at least two epochs such as a current epoch and a previous epoch, wherein the target training dynamics information are acquired from the current epoch and the previous epoch and used in the current epoch together with the predictive training dynamics information to train the training dynamics prediction model. The first dataset may be provided for training the training dynamics prediction model. The classification model may be applied on the training data included in the first dataset to acquire the classification information during the current epoch. The set of one or more classification information may be acquired by applying the classification model on training data (which could be different to the training data in the current epoch) in one or more previous epochs.

According to an example embodiment, training the training dynamics prediction model may include acquiring loss information based on the target training dynamics information and the predictive training dynamics information.

According to an example embodiment, acquiring the loss information may include acquiring a Kullback-Leibler divergence value based on the target training dynamics information and the predictive training dynamics information.

According to an example embodiment, the first dataset may include one or more data pre-labeled with a class.

According to an example embodiment, the method for training a training dynamics prediction model may further include training the classification model based on the classification information and the pre-labeled class on the training data included in the first dataset.

According to an example embodiment, training the training dynamics prediction model may include acquiring loss information based on the classification information and the pre-labeled class on the training data included in the first dataset.

According to an example embodiment, acquiring the loss information may include acquiring a cross-entropy loss value based on the classification information and the pre-labeled class.

According to an example embodiment, acquiring the loss information may include determining, based on the classification information, a class to which the training data included in the first dataset is most likely to belong, and checking whether the determined class matches the pre-labeled class.

According to an example embodiment, acquiring the target training dynamics information may include calculating, based on the classification information and the a set of one or more classification information acquired based on the classification model.

According to an example embodiment, acquiring the predictive training dynamics information may include acquiring, based on the classification model, hidden feature information on the training data, and acquiring, based on the hidden feature information, the predictive training dynamics information.

According to an example embodiment, acquiring the target training dynamics information may include calculating, based on the classification information (acquired in the current epoch) and the one or more classification information acquired based on the classification model in one or more previous epochs, average values of probability of data belonging to each class.

According to another aspect, there is provided a computer-implemented method for training a classification model of a model training system, which includes a classification model and the training dynamics prediction model, for outputting a classification result corresponding to input data, the method including a first operation of training, based on a first dataset, the classification model and the training dynamics prediction model, selecting, using the training dynamics prediction model, some data from a second dataset, acquiring a result of labeling the selected data with a corresponding class, and a second operation of training, based on the result of labeling the selected data with the corresponding class, the classification model and the training dynamics prediction model. The first dataset includes one or more data pre-labeled with a class, and the second dataset includes one or more data not pre-labeled with a class.

According to an example embodiment, the first operation may include acquiring, based on the classification model, target training dynamics information corresponding to training data included in the first dataset, acquiring, based on the training dynamics prediction model, predictive training dynamics information corresponding to the training data included in the first dataset, and acquiring, based on the target training dynamics information and the predictive training dynamics information, loss information. The training dynamics prediction model may be trained as described herein, i.e. the computer-implemented method for training the classification model and the computer-implemented method for training a training dynamics prediction model may be combined.

According to an example embodiment, training the classification model and the training dynamics prediction model may include acquiring a Kullback-Leibler divergence value based on the target training dynamics information and the predictive training dynamics information.

According to an example embodiment, acquiring the predictive training dynamics information may include acquiring, based on the classification model, hidden feature information on the training data, and acquiring, based on the hidden feature information, the predictive training dynamics information.

According to an example embodiment, the second operation may include merging the result of labeling the selected data with the corresponding class into the first dataset, and performing the first operation again using the merged result as a new first dataset.

According to an example embodiment, the first operation may include acquiring, based on the classification model, classification information on training data included in the first dataset, and acquiring, based on the classification information and the pre-labeled class on the training data included in the first dataset, loss information. The classification information may include a result of calculating, for each of a plurality of classes, probability of data belonging to that class.

According to an example embodiment, acquiring the loss information may include acquiring a cross-entropy loss value based on the classification information and the pre-labeled class.

According to an example embodiment, the selecting some data from the second dataset may include acquiring, based on the training dynamics prediction model, corresponding predictive training dynamics information for each of the one or more data included in the second dataset, calculating, based on the predictive training dynamics information, uncertainty for each of the one or more data included in the second dataset, and determining some data to be selected from the second dataset based on a result of calculating the uncertainty. The predictive training dynamics information may include a result of calculating probability for each of a plurality of classes that the data belongs to that class.

According to an example embodiment, calculating the uncertainty may include calculating, based on the predictive training dynamics information, an entropy value for each of the one or more data included in the second dataset, and as the entropy value is greater, the uncertainty may be determined to be greater.

According to an example embodiment, calculating the uncertainty may include calculating, based on the predictive training dynamics information, a margin value for each of the one or more data included in the second dataset, and as the margin value is smaller, the uncertainty may be determined to be greater.

According to an example embodiment, acquiring the result of labeling with the corresponding class may include requesting one or more workers to determine to which class the selected data belongs.

According to yet another aspect, there is provided an electronic apparatus for training a training dynamics prediction model comprising a transceiver, a memory configured to store instructions, and a processor. The processor is connected with the transceiver and the memory and configured to acquire, based on a classification model of a model training system, which includes the classification model and the training dynamics prediction model, classification information on training data included in a first dataset, acquire during a current epoch, based on the classification information and a set of one or more classification information acquired based on the classification model in one or more previous epochs, target training dynamics information, acquire during a current epoch, based on the training dynamics prediction model, predictive training dynamics information on the training data; and train, based on the target training dynamics information and the predictive training dynamics information, the training dynamics prediction model.

Additional aspects of example embodiments will be set forth in part in the description which follows and, in part, will be apparent from the description, or may be learned by practice of the disclosure.

According to example embodiments, the training apparatus and the method thereof performs active machine learning while training the training dynamics prediction model, thereby training the classification model effectively with reduced workforce and cost.

In addition, according to an example embodiment of the present disclosure, the amount of computation is significantly reduced by training the training dynamics prediction model and using the training dynamics prediction model for data selection, which makes it possible to train the classification model quickly without losing its classification accuracy.

The effects of the present disclosure are not limited to the effects mentioned above, and other effects not mentioned will be clearly understood by those skilled in the art from the description of the claims.


BRIEF DESCRIPTION OF THE DRAWINGS

These and/or other aspects, features, and advantages of the invention will become apparent and more readily appreciated from the following description of example embodiments, taken in conjunction with the accompanying drawings of which:

FIG. 1 is a schematic diagram showing a model training system according to an example embodiment;
FIG. 2 is an exemplary diagram illustrating an operation of training a model according to an example embodiment;
FIGS. 3A to 3D are exemplary diagrams for explaining operations of a training dynamics prediction model according to an example embodiment;
FIG. 4 is an exemplary diagram illustrating a specific operation of training a model using a model training system according to an example embodiment;
FIG. 5 is a flowchart illustrating a method for training a model according to an example embodiment; and
FIG. 6 is an exemplary diagram of a configuration of an electronic apparatus for training a model according to an example embodiment.


DETAILED DESCRIPTION

The terms used in the example embodiments have been selected from general terms that are currently widely used when possible while taking functions in the present disclosure into consideration, but these may vary according to the intention of those skilled in the art, a precedent, the emergence of new technologies, and the like. In addition, in certain cases, there are terms arbitrarily selected by the applicant, and in this case, the meaning will be described in detail in the corresponding description. Therefore, the terms used in the present disclosure should be defined based on the meaning of the term and the whole contents of the present disclosure, not just the name of the term.

Throughout the specification, when it is stated that a part "comprises" or "includes" a certain component, it means that other components may further be included, and it does not preclude other components, unless otherwise stated. In addition, terms such as "...part", "... module", and the like described in the specification mean a unit for performing at least one function or operation, which may be implemented as hardware or software, or as a combination of hardware and software.

Throughout the specification, expression "at least one of a, b, and c" may include 'a only', 'b only', 'c only', 'a and b', 'a and c', 'b and c', or 'all of a, b, and c'.

In the following, with reference to the accompanying drawings, example embodiments of the present disclosure will be described in detail so that those of skilled in the art to which the present disclosure pertains can easily implement them. However, the present disclosure may be implemented in various different forms and is not limited to the example embodiments described herein.

Hereinafter, example embodiments of the present disclosure are described in detail with reference to the accompanying drawings.

In describing example embodiments, detailed descriptions of technical specifications that are well-known in the art and are not directly related to the present disclosure may be omitted. This is to more clearly convey the gist of the present disclosure without obscuring it by omitting unnecessary description.

For the same reason, some elements are exaggerated, omitted, or simplified in the drawings and, in practice, the elements may have sizes and/or shapes different from those shown in the drawings. Throughout the drawings, the same or equivalent parts are indicated by the same reference numerals.

Advantages and features of the present disclosure and methods of accomplishing the same may be understood more readily by reference to the following detailed description of example embodiments and the accompanying drawings. The present disclosure may, however, be embodied in many different forms and should not be construed as being limited to the example embodiments set forth herein. Rather, these example embodiments are provided so that this disclosure will be thorough and complete and will fully convey the concept of the disclosure to those skilled in the art, and the present disclosure will only be defined by the appended claims. Like reference numerals refer to like elements throughout the specification.

It will be understood that each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing apparatus, such that the instructions which are executed via the processor of the computer or other programmable data processing apparatus create means for implementing the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instruction means which implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions which are executed on the computer or other programmable apparatus provide steps for implementing the functions/acts specified in the flowcharts and/or block diagrams.

Furthermore, the respective blocks may illustrate parts of modules, segments, or codes including at least one or more executable instructions for performing specific logic function(s). Moreover, it should be noted that the functions of the blocks may be performed in a different order in several modifications. For example, two successive blocks may be performed substantially at the same time, or may be performed in reverse order according to their functions.

Artificial intelligence (AI) may be a type of computer program that mimics human intelligence through a series of logical algorithms that think, learn, and judge like humans. So-called artificial intelligence can process complex operations in a processor corresponding to the human brain through a neural network that resembles the human nervous system. In this specification, a process of normalizing and modeling features through machine learning and other learning that may be included in deep learning will be described.

A neural network may refer to network modeling operation principles of a neuron, which is a basic unit of a human nervous system, and a connection relationship between neurons. The neural network may be a data processing system in which individual nodes or processing elements are connected in the form of layers. The neural network may include a plurality of layers, and each layer may include a plurality of neurons. In addition, the neural network may include a synapse corresponding to a nerve stimulator capable of transmitting data between neurons.

Specifically, the neural network may refer to a data processing model as a whole in which artificial neurons change the binding strength of synapses through repetitive learning and have the ability to solve a given problem or a problem with a variable.

The neural network may be trained using training data. Specifically, the training may include a process of determining parameters of the neural network using feature data in order to achieve purposes such as classification, regression, and clustering of input data. More specifically, there may be a weight or a bias as a factor determining the parameter.

The neural network may train input data to classify or cluster the input data according to a pattern, and the trained neural network may be referred to as a trained model. Specifically, the training method may be divided into supervised learning, unsupervised learning, semi-supervised learning, and reinforced learning. More specifically, supervised learning may be a method of machine learning for inferring functions from the training data. Outputting a continuous result value among functions inferred through machine learning may be considered regression analysis, and outputting a result value by predicting a class of input data may be considered classification.

In supervised learning, a label may be given to the training data, and the label may include a meaningful result value that the neural network should infer. Specifically, the result value to be inferred by the neural network may be labeling data. More specifically, the training data and labeling data corresponding to the training data may consist of one training set, and the neural network may acquire input values and result values in the form of training sets.

The training data may include a plurality of feature vectors, and the neural network may infer the training data and label individual feature vectors to output the labeling data as a result value. Through the training data and the labeling data, the neural network may infer a function for the relation between respective data. In addition, parameters for individual vectors may be optimized through feedback on functions inferred from the neural network.

Active learning (AL) methods may include selecting and annotating the most useful data samples from unlabeled data pools and scaling labeled datasets with a limited budget. In particular, an uncertainty-based method predicts the uncertainty of unlabeled data and selects the most uncertain data, which is known to be effective in improving model performance. However, these methods may not take advantage of training dynamics, i.e., methods that constantly change the model behavior during model optimization through stochastic gradient descent. Training dynamics, in which significant amounts of information are generated during training, are known to provide clues for measuring data difficulty.

An example embodiment of the present disclosure may include a training dynamics prediction model, a novel active learning method that utilizes training dynamics to quantify uncertainty of unlabeled data. Since it can be very inefficient to track the training dynamics of large unlabeled data, a new predictive model for learning the training dynamics of the given data may be utilized in an example embodiment of the present disclosure. In the data selection phase, the model can quantify the uncertainty by predicting the training dynamics on the unlabeled data. By performing the method according to an example embodiment of the present disclosure, better or similar performance can be achieved on both balanced and imbalanced benchmark datasets compared to the conventional active learning method.

More specifically, active learning can aim to solve the real problem of selecting the most useful data samples from a large unlabeled data pool and annotating them to scale the labeled data with a limited budget. Active learning has received increasing attention in recent years, as deep neural networks often suffer from a lack of data. Active learning methods can be classified into two mainstream approaches: diversity-based approaches and uncertainty-based approaches. Diversity-based methods may focus on constructing subsets that follow the distribution of the target data. Uncertainty-based methods can create uncertainty of unlabeled data and label the most uncertain data samples, which can be effective in improving model performance. Therefore, the most important question for uncertainty-based methods may be how the data uncertainty is quantified.

According to an example embodiment of the present disclosure, data uncertainty may be quantified using training dynamics (TD). Training dynamics may include constantly changing model behavior on each data sample while optimizing via stochastic gradient descent. According to an example embodiment of the present disclosure, even if the final prediction is the same for two pieces of training data, it is possible to further confirm whether the data is easy or hard for the target classification model to learn by observing the training dynamics. Additionally, according to an example embodiment of the present disclosure, training dynamics may be utilized to predict uncertainty of unlabeled data.

Further, regarding the use of training dynamics for active learning, there have been the following drawbacks: (1) active learning assumes a large unlabeled data pool, so tracking each set of training dynamics from epoch to epoch is impracticable (considering its impractical amount of computation); and (2) some of the existing training dynamics methods require each data sample to have an actual label to measure whether the target model is easy or hard to learn, whereas active learning methods need to infer the uncertainty of each data sample without an actual label in order to select data worth labeling. The present disclosure addresses these problems and proposes a method of using a training dynamics prediction model, which is a new active learning method for predicting uncertainty of unlabeled data by efficiently utilizing training dynamics, as an example embodiment.

According to an example embodiment of the present disclosure, the training dynamics are predicted through the learnable model so that there is no need to track the training dynamics of unlabeled data every epoch on a large scale. In this regard, the training dynamics prediction model may be trained with training dynamics of training data that can be easily acquired while training a classification model (such as that associated with a classification model 110 to be described below). Also, in the data selection phase, the training dynamics predicted by the trained model can be utilized to quantify the uncertainty of unlabeled data. Because the prediction model (associated with a training dynamics prediction model 120 described below) predicts the training dynamics only once in the data selection phase, the training dynamics of unlabeled data can be efficiently captured.

Hereinafter, example embodiments associated with the present disclosure will be described in more detail based on each drawing.

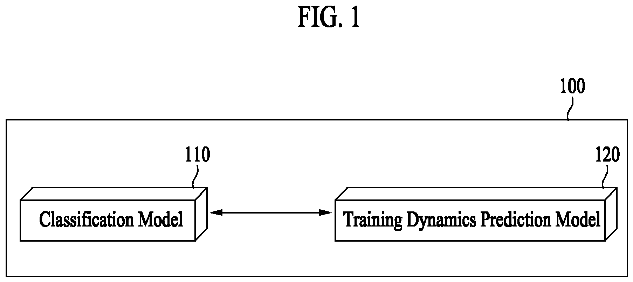

FIG. 1 is a schematic diagram showing a model training system according to an example embodiment.

According to various example embodiments, the model training system 100 may include a classification model 110 and a training dynamics prediction model 120. The classification model 110 and the training dynamics prediction model 120 should be understood as conceptually or logically separated components, and do not necessarily have to be implemented as physically separated components. Depending on the example embodiment, operations of the classification model 110 and the training dynamics prediction model 120 to be described later may be performed by separate devices or servers, or by one device (server). For example, the electronic apparatus, which will be described later, may perform only a part of the operation of the classification model 110 and the training dynamics prediction model 120, but may also perform the entire operation.

In addition, depending on the example embodiment, the classification model 110 and the training dynamics prediction model 120 may be implemented within one component, with for example the classification model 110 including the training dynamics prediction model 120, or the classification model 110 and the training dynamics prediction model 120 being implemented as separate functions in one integrated model. However, for convenience of explanation, the classification model 110 and the training dynamics prediction model 120 are described as separate components below.

At least some of the classification model 110 and the training dynamics prediction model 120 may be understood as a broad concept including a series of application programs that can operate on a network server, and various databases built therein. For example, at least a portion of the classification model 110 and the training dynamics prediction model 120 may be implemented using network server programs variously provided depending on the operating system such as DOS, Windows, Linux, Unix, or MacOS.

The classification model 110 serves to infer a class value of the data not labeled with a class after being trained based on one or more data, or sets of data, labeled with the class. For example, the classification model 110 is trained based on a plurality of data including first data having a class of "dog", second data having a class of "cat", and third data having a class of "chicken". Then, it may infer for unlabeled data whether the corresponding data is "dog", "cat", or "chicken".

The training dynamics prediction model 120 may serve to determine data suitable for training the classification model 110 among data not labeled with a class. That is, the training dynamics prediction model 120 may be used to determine the data to label. In this case, the data determined by the training dynamics prediction model 120 may be labeled and then used for training the classification model 110.

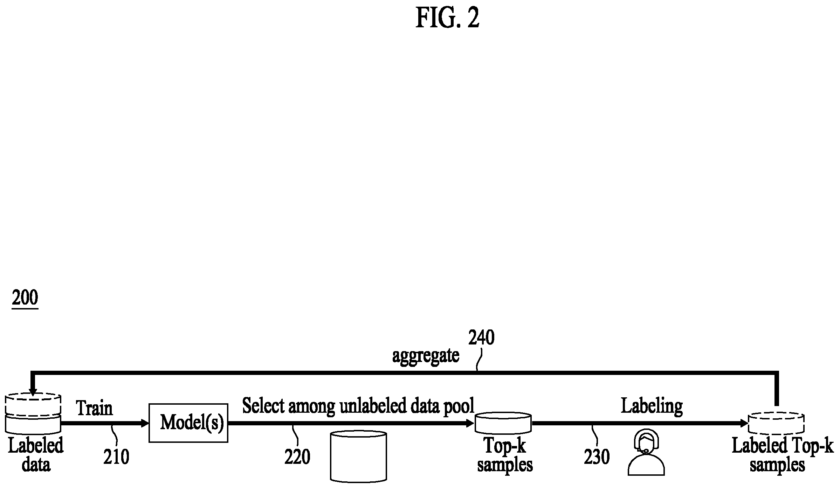

More details associated with the operation of the classification model 110 and the training dynamics prediction model 120 will be described later with reference to FIGS. 2 to 5.

A series of operations associated with model training methods according to various example embodiments may be implemented by a single physical device, or may be implemented in a manner in which a plurality of physical devices are organically coupled. For example, some of the components included in the model training system 100 may be implemented by one physical device, and the other part may be implemented by another physical device. For example, one physical device may be implemented as at least a part of the classification model 110, or may include at least a part of the classification model 110, and another physical device may be implemented as a part of the training dynamics prediction model 120, or may include at least a part of the training dynamics prediction model 120. In some cases, each component included in the classification model 110 and the training dynamics prediction model 120 may be distributed and arranged in different physical devices, and the distributed components are organically combined, so as to perform the functions and operations of the model training system 100.

FIG. 2 is an exemplary diagram illustrating an operation of training a model according to an example embodiment. Hereinafter, for convenience of explanation, the subject using a classification model and a training dynamics prediction model will be described as an "electronic apparatus", but this is exemplary. The operations described as performed by the electronic apparatus below should be understood as a general description associated with the use of the classification model and the training dynamics prediction model.

Referring to FIG. 2, the electronic apparatus 200 according to an example embodiment trains the classification model 110 and the training dynamics prediction model 120 based on the first dataset (210). The first dataset includes one or more data pre-labeled with a class. For example, the first dataset may include first data corresponding to an image with a class labeled as "dog", second data corresponding to an image with a class labeled as "cat", and third data corresponding to an image with a class labeled as "chicken".

According to an example embodiment, the electronic apparatus acquires classification information corresponding to the training data included in the first dataset based on the classification model 110, and trains the classification model 110 based on the classification information and pre-labeled classes on the training data included in the first dataset. In this regard, the classification information may include a result of calculating, for each of a plurality of classes, a probability of data belonging to that class. In this case, the electronic apparatus may acquire loss information based on the classification information and the pre-labeled class, and train the classification model 110 based on the loss information. It may be understood that the classification model 110 is trained in a direction to reduce the difference between the probability value for each class included in the classification information and the value of the pre-labeled class. However, this is only a specific example, and the training process of the classification model 110 of the present disclosure is not limited to this example.

The electronic apparatus may acquire target training dynamics information corresponding to the training data included in the first dataset based on the classification model 110, acquire predictive training dynamics information corresponding to the training data included in the first dataset based on the training dynamics prediction model 120, and train the training dynamics prediction model 120 based on the target training dynamics information and the predictive training dynamics information. More specifically, the electronic apparatus may acquire loss information (this may be different in actual values, etc. from the loss information acquired based on the classification information and the pre-labeled class) based on the target training dynamics information and the predictive training dynamics information, and train the training dynamics prediction model 120 based on the loss information. In this regard, the target training dynamics information and the predictive training dynamics information may include a result of calculating, for each of a plurality of classes, a probability of data belonging to that class.

The electronic apparatus according to an example embodiment may acquire hidden feature information on the training data based on the classification model 110, and acquire predictive training dynamics information based on the hidden feature information.

According to an example embodiment of the present disclosure, in more detail with respect to the acquisition of the target training dynamics information, the electronic apparatus may acquire the classification information on the training data included in the first dataset based on the classification model 110 (acquired in the current epoch), and acquire the target training dynamics information based on the classification information (acquired in the current epoch) and the one or more sets of classification information acquired based on the classification model 110 based on the classification model in one or more previous epochs (for instance, up to the immediately preceding epoch). In this regard, the target training dynamics information may include information corresponding to the training data included in the first dataset, and the classification information may include a result of calculating a probability for each of a plurality of classes that the data belongs to that class. That is, the electronic apparatus may use at least some of the plurality of classification information acquired based on the classification model in one or more previous epochs (and optionally also from the current epoch), in order to acquire the target training dynamics information. However, the scope of the present disclosure is not limited thereto.

In this case, it may be understood that the classification model 110 is trained in a direction to narrow the difference between the target training dynamics information and the predictive training dynamics information, but this is only a specific example. The training process of the classification model 110 of the present disclosure is not limited to such an example.

Depending on the example embodiment, the first loss information acquired based on the probability value for each class included in the classification information and the pre-labeled class, and the second loss information acquired based on the target training dynamics information and the predictive training dynamics information may be comprehensively considered, and the classification model 110 and the training dynamics prediction model 120 may be trained in a direction in which the sum thereof is minimized.

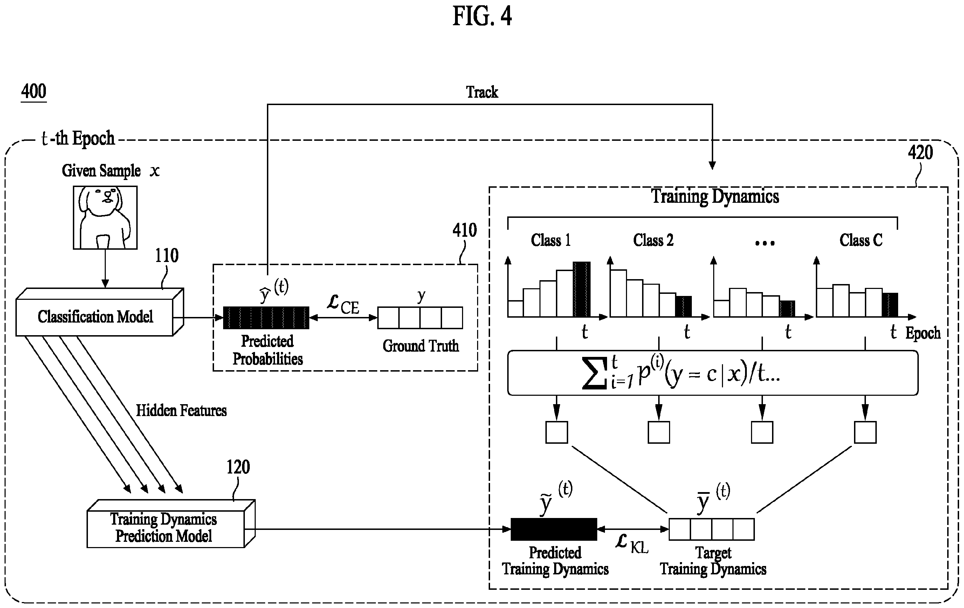

A more detailed description and examples associated with the training of the classification model 110 and the training dynamics prediction model 120 will be described later with reference to FIG. 4.

The electronic apparatus selects some data from the second dataset including one or more data not pre-labeled with a class by using the training dynamics prediction model 120 (220). After the selected data is labeled in operation 230 to be described later, it may be used again for training the classification model 110 and the training dynamics prediction model 120 in operation 240 to be described later. That is, in operation 220, the electronic apparatus may select data for class labeling to train the classification model 110 and the training dynamics prediction model 120.

The electronic apparatus according to an example embodiment may select some data based on uncertainty calculated in relation to at least one of training of the classification model 110 and training of the training dynamics prediction model 120. In this regard, the uncertainty may indicate, but is not limited to, the degree of difficulty for a model to classify corresponding data.

More specifically, the electronic apparatus according to an example embodiment may acquire predictive training dynamics information corresponding to the one or more data included in the second dataset based on the training dynamics prediction model 120, calculate uncertainties for each of the one or more data included in the second dataset based on the predictive training dynamics information, and determine some data to be selected from the second dataset based on the result.

In operation 210, predictive training dynamics information is also acquired to train the classification model 110 and the training dynamics prediction model 120. But in operation 210, the predictive training dynamics information is acquired based on the first dataset, which is different from operation 220, in which the predictive training dynamics information is acquired based on the second dataset.

In this regard, the predictive training dynamics information may include a result of calculating a probability for each of the plurality of classes that data belongs to that class.

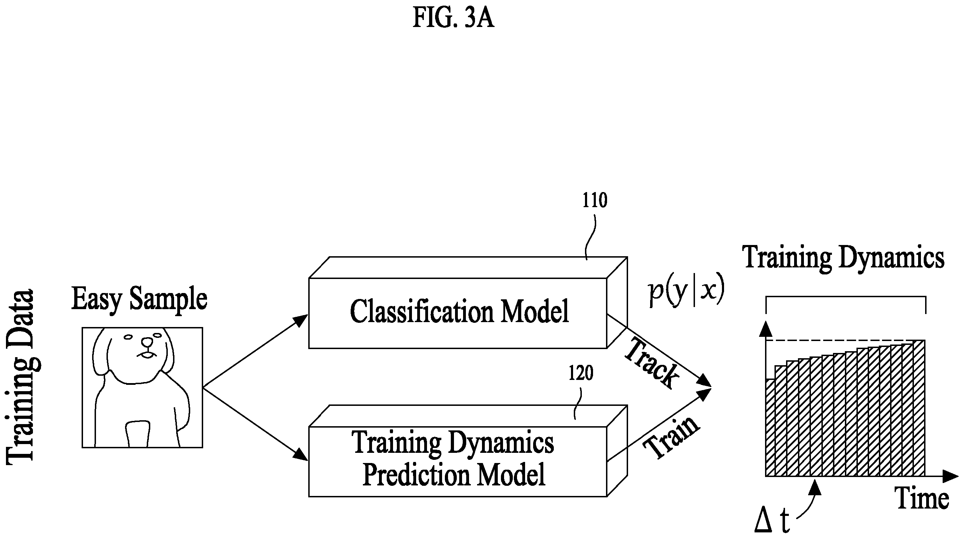

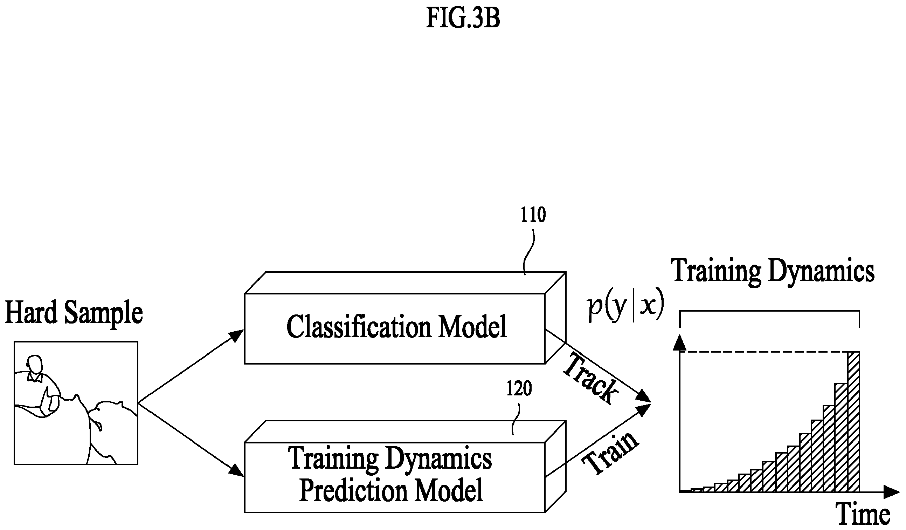

The method of calculating the uncertainty is described in more detail with reference to FIGS. 3A to 3D. Further referring to FIGS. 3A and 3B, in the case of labeled data, the uncertainty may be inferred based on a method such as training dynamics. In the case of labeled data, the uncertainty may be determined by observing how the classification result of each data changes as the classification model 110 is trained over time (that is, over epochs), and the training dynamics prediction model 120 may output the trend of these fluctuations as a specific value. For example, FIG. 3A includes an example graph showing how the classification model 110 classifies the data over time (i.e., according to the training degree of the classification model 110 over epochs) when easy sample data is input. It can be seen that even if the classification model 110 is not trained for a long time, it soon determines that the probability of belonging to a specific class *y* is high. On the other hand, FIG. 3B includes a graph showing how the classification model 110 classifies the corresponding data when hard sample data is input over time (that is, according to the training degree of the classification model 110 over epochs). It can be seen that the probability of belonging to class *y* is determined not to be high before the classification model 110 is sufficiently trained and then the probability of belonging to class *y* is significantly increasing as time passes.

Meanwhile, in the case of unlabeled data, the true class is not known, and in order to observe how the classification result changes over epochs, it may be necessary to perform an operation for each epoch individually, which could be a problem requiring excessive amount of computation and resources (in the case of labeled data, classification results for each epoch are naturally acquired in a classification process through the classification model 110 in many cases). By contrast, the example embodiment of the present disclosure acquires the predicted probability value for each class using the training dynamics prediction model 120 and predicts the uncertainty using this so that the amount of computation is significantly reduced and resources are significantly saved in that it is not necessary to repeat the computation for each epoch, which is a great advantage. That is, the present disclosure has a technical effect that the amount of computation is significantly reduced compared to conventional methods, and accordingly, the classification model 110 is trained quickly without losing classification accuracy, by training the training dynamics prediction model 120 and predicting the probability value for each class using the trained training dynamics prediction model 120 to predict the uncertainty.

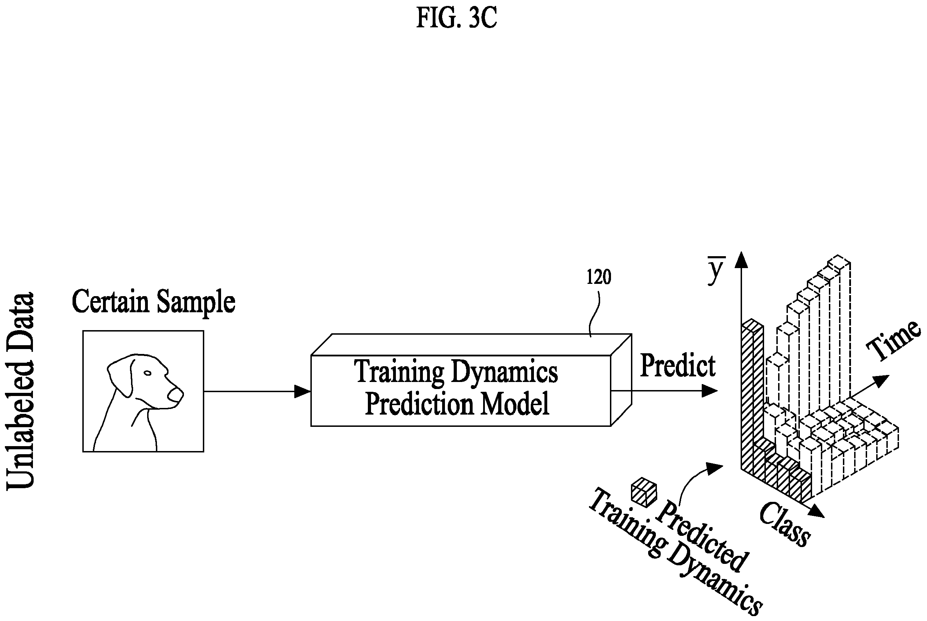

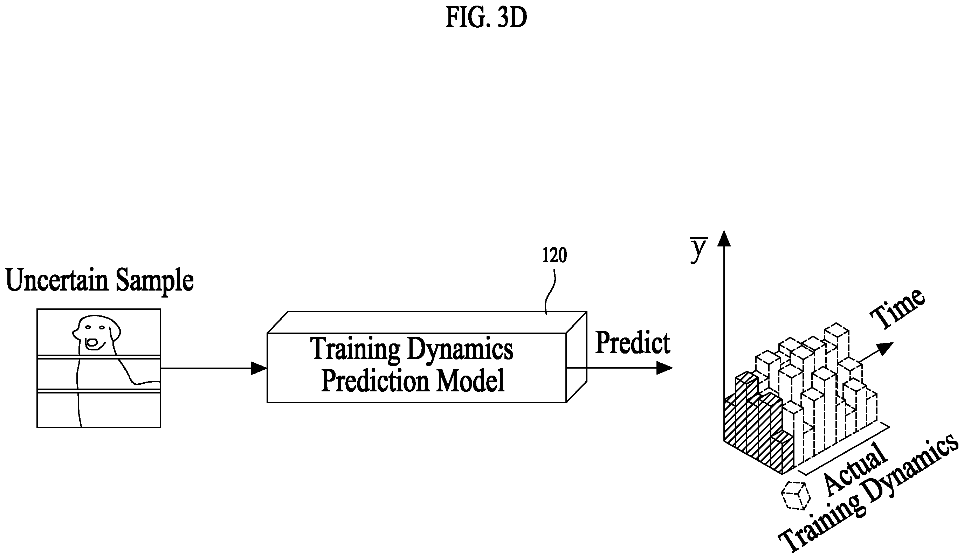

In this regard, an example of predicting uncertainty of unlabeled data is described in FIGS. 3C and 3D. FIG. 3C includes an example in which the training dynamics prediction model 120 predicts how the classification model 110 will classify the data over time when certain sample (which is related to easy sample) data is input, and FIG. 3D includes an example in which the training dynamics prediction model 120 predicts how the classification model 110 will classify the corresponding data over time when uncertain sample (which is related to hard sample) data is input. As a result of the prediction by the training dynamics prediction model 120, it can be seen that classification results of certain data are converged on a specific class (that is, the uncertainty is predicted to be low) while those of uncertain data are not converged on a specific class (that is, the uncertainty is predicted to be high).

In the examples shown in FIGS. 3A to 3D, easy samples may be inferred or predicted as data having low uncertainty compared to hard samples. Meanwhile, in many embodiments of the invention, the method for determining the uncertainty (that is, the method for calculating the training dynamics in the case of labeled data) includes, for example, a method of calculating an entropy value and/or a method of calculating a margin value, but is not limited thereto.

According to an example embodiment, two different scores for training dynamics, entropy and margin, may be used to monitor model behavior during training. The entropy and margin can be employed to quantify uncertainty. The entropy may be used to represent model reliability in general. An entropy value for data *x* according to an example may be defined as in Equation 1 below.

[Equation 1]

$$H^{(t)}(x) = - \sum_{i=1}^{C} p^{(t)}(i|x) \log p^{(t)}(i|x)$$

$H^{(t)}(x)$ may correspond to the entropy value for data *x* in the t-th epoch, C may correspond to the number of candidate classes to which data *x* may belong, and $p^{(t)}(i|x)$ may correspond to the probability of *x* belonging to class *i* in the t-th epoch (each class may be matched to the natural number 1 to the natural number C one by one).

The electronic apparatus may get data *x* and actual label (class) *y* from a specific dataset D. *i* may be a variable that iterates over all possible classes C. $p^{(t)}$ may correspond to a softmax output of the classification model 110 at time t. $p^{(t)}$ may be defined as a softmax function (that is, a function that normalizes all input values to output values between 0 and 1 and the sum of output values is always 1), but it is not necessarily limited thereto.

An entropy value for calculating uncertainty (training dynamics) for labeled data according to an example may be calculated as in Equation 2 below.

[Equation 2]

$$H_{\mathrm{TD}}(x) = -\sum_{i=1}^{C}\left(\sum_{t} p^{(t)}(i|x)\Delta t\right)\log\left(\sum_{t} p^{(t)}(i|x)\Delta t\right)$$

$H_{\mathrm{TD}}(x)$ corresponds to a training dynamics value for data $x$ in the t-th epoch, $\Delta t$ corresponds to the unit time for recording the output of the model, and the remaining symbols and signs may be understood with reference to the description of Equation 1.

Also in the following equations, symbols and signs that are not separately described with respect to a given Equation A, for any Equation A may be understood with reference to the descriptions of Equations 1 to A-1.

In this regard, $\Delta t$ may correspond to a unit time step. For example, if the model is trained for 100 epochs and records the output every 10 epochs, then $\Delta t$ may correspond to 10/100 = 0.1. Where $\Delta t$ = 1/T, T may correspond to the total number of epochs to be trained. However, the calculation of $\Delta t$ is not necessarily limited to this method.

According to an example, unlike $H^{(t)}$, $H_{\mathrm{TD}}$ may be calculated as the area under the graph of prediction $p^{(t)}$ for time step t considering all predictions during training. $H_{\mathrm{TD}}$ may encapsulate the overall trend of the model during training while avoiding a bias towards a snapshot of $p^{(t)}$ at a specific time step t.

In addition, as will be described below, the entropy according to an example embodiment may not include actual class information, unlike the margin to be described later, but may focus only on the confidence level of the model for the given data $x$. Accordingly, the entropy value may have a larger value if the prediction of the entire class becomes uniform (i.e., uncertain). On the other hand, the margin according to an example embodiment may be defined as a distance between the output of an actual label and the maximum output of another label.

According to an example, the training dynamics may be defined as the sum of the outputs at time step t.

Meanwhile, in the case of unlabeled data, there may be predicted probability data (e.g., the aforementioned prediction training dynamics information) for each class only without separate probability data for each epoch. In this case, the predicted entropy value for calculating the uncertainty may be calculated as in Equation 3 below.

[Equation 3]

$$\widehat{H}(\tilde{\mathbf{y}}) = -\sum_{i} p_m(y=i|x)\log p_m(y=i|x)$$

$\tilde{y}$ may correspond to the predicted probability data for each class, $\hat{H}(\tilde{y})$ may correspond to the predicted entropy value, and $p_m(y=i|x)$ may correspond to the result of predicting the probability of $x$ belonging to class $i$ by the training dynamics prediction model 120.

Since the ultimate purpose of the training dynamics prediction model 120 is the calculation of uncertainty, the predicted entropy may be calculated directly using the average of predicted probabilities for each epoch ($p_m$ above) directly to reduce the amount of computation instead of averaging the result for each epoch as in Equation 2. Depending on the example embodiment, it may be trained to directly predict the average value of the probabilities for each epoch (that is, not to separately learn the trend of the probabilities for each epoch). For reference, "Predicted Training Dynamics" and hatched blocks in the graphs shown in FIGS. 3C and 3D correspond to examples of predicted results of averaging the probabilities for each epoch.

However, as will be described later in FIG. 4, the training dynamics prediction model 120 may be trained to predict the classification probability for each epoch as a whole, depending on the example embodiment. In this case, the uncertainty may be predicted using Equation 2 (i.e., using an equation that uses all of the classification probability values for each epoch as input conditions) instead of Equation 3, depending on the example embodiment. Even in this case, it may be possible to predict the uncertainty using Equation 3.

The entropy value calculated based on Equation 1 may have a larger value as the probability that data $x$ belongs to each class is calculated to be more uniform. In addition, the value calculated based on Equations 2 and 3 is a value acquired by averaging the results of calculating the probability for each epoch that data $x$ belongs to each class, which may also have a larger value as the probability that data $x$ belongs to each class on average is more uniform. That is, according to such a calculation method, it may be determined that the larger the calculated value, the greater the data uncertainty.

Meanwhile, a margin value for data $x$ according to an example may be defined as in Equation 4 below.

[Equation 4]

$$M^{(t)}(x,y) = f^{(t)}(x,y) - \max_{i \neq y} f^{(t)}(x,i)$$

$M^{(t)}(x,y)$ corresponds to the margin value of data $x$ and true class $y$ to which data $x$ belongs in the t-th epoch, $f^{(t)}(x,y)$ corresponds to the function that reflects the probability that data $x$ belongs to true class $y$ in the t-th epoch, and

$$\max_{i \neq y} f^{(t)}(x,i)$$

may correspond to the largest value among the calculated values of the probabilities of data $x$ belonging to the classes other than class $y$ in the t-th epoch.

In this regard, $f^{(t)}$ may correspond to a softmax function, but is not limited thereto, and may correspond to various examples such as raw logits.

A margin value for calculating uncertainty (training dynamics) for labeled data according to an example may be defined as in Equation 5 below.

[Equation 5]

$$M_{\mathrm{TD}}(x,y) = \sum_t f^{(t)}(x,y)\Delta t - \max_{i \neq y} \sum_t f^{(t)}(x,i)\Delta t$$

$M_{\mathrm{TD}}(x,y)$ may correspond to the margin value when the true class to which data $x$ belongs is $y$.

According to an example, at time step t, $f^{(t)}$ may be chosen to be a function such as raw logits or softmax probability. Hereinafter, an example embodiment with $p^{(t)}(y|x)$ chosen as $f^{(t)}(x,y)$ may be described for convenience of description, but the scope of the present disclosure is not limited thereto.

If the model determines that the sample is easy enough, the margin can be prominent from the start of training. However, in the opposite case, the model will learn slowly, and the margin may have small or negative values. Therefore, the training dynamics of margin $M_{\mathrm{TD}}$ need to represent the overall inclination of the model in the training process towards the real class $y$, compared to the second-best guess of the model.

Meanwhile, in the case of unlabeled data, there may be predicted probability data (e.g., the aforementioned predictive training dynamics information) for each class only without separate probability data for each epoch. In this case, the predicted margin value for calculating the uncertainty may be calculated as in Equation 6 below.

[Equation 6]

$$\widehat{M}(\tilde{\mathbf{y}},\widehat{y}) = p_m(y = \widehat{y}|x) - \max_{i \neq \widehat{y}} p_m(y = i|x)$$

$\widehat{M}(\tilde{y},\widehat{y})$ may correspond to the margin value when the predicted class is $\widehat{y}$ (a method of calculating $\widehat{y}$ will be described later in FIG. 4).

As mentioned in the description of Equation 3, since the ultimate purpose of the training dynamics prediction model 120 is the calculation of uncertainty, the predicted entropy may be directly calculated by directly predicting and using the average value of the probabilities for each epoch ($p_m$ above) instead of averaging the result for each epoch as in Equation 2. However, the training dynamics prediction model 120 may also be trained to predict the classification probability for each epoch as a whole. In this case, the uncertainty may be predicted using Equation 5 (i.e., using an equation that uses all of the classification probability values for each epoch as input conditions) instead of Equation 6, depending on the example embodiment (in the case of predicting uncertainty using Equation 5, true class $y$ may be replaced with the predicted true class $\widehat{y}$).

The margin value calculated based on Equation 4 may have a larger value as data $x$ is clearly classified into true class $y$. In addition, the value calculated based on Equations 5 and 6 is a value acquired by averaging the results of calculating the margin value of data $x$ for each epoch, which may also have a larger value as data $x$ is clearly classified into true class $y$ (in addition, the faster it is specified as belonging to true class $y$ over epochs). That is, according to such a calculation method, it may be determined that the larger the calculated value, the smaller the data uncertainty.

As such, various methods may be employed to calculate the uncertainty, and parameters considered respectively may be different (for example, Equations 1 to 3 may correspond to a method that does not consider the true class of data, and Equations 4 to 6 may correspond to a method of considering the true class of data). In addition to the above Equations 1 to 6, the uncertainty may be calculated based on various methods.

Returning back to FIG. 2, regarding a specific method of selecting data based on uncertainty, there may be one or more of various methods such as (but not limited to) a preset number of data being selected in the order of highest uncertainty, all data with uncertainty exceeding a specific threshold value being selected, or a predetermined ratio of data being selected from the second dataset in the order of highest uncertainty. However, the method is not limited to the above examples.

As described above, certain methods of calculating the probability that the data belongs to each class for each epoch and inferring uncertainty based thereon may require an excessive amount of computation. However, in the case of using the training dynamics prediction model 120, once the training dynamics prediction model 120 is trained, there is no need to repeat the computation for each epoch, which significantly reduces the amount of computation. That is, the present disclosure has a technical effect that the amount of computation is significantly reduced compared to conventional methods, by training the training dynamics prediction model 120 and using the training dynamics prediction model 120 in data selection, and accordingly, the classification model 110 is trained quickly without losing classification accuracy.

Meanwhile, although the criteria for selecting data based on uncertainty have been described in the above example embodiment, this is exemplary. The criteria for selecting data are not limited to uncertainty and can be set in various ways, and it should be understood that the training dynamics prediction model 120 may be trained and utilized to apply the criteria. For convenience of explanation, example embodiments of predicting uncertainty using the training dynamics prediction model 120 and selecting data based thereon are also described, but it should be understood that the following description may be applied mutatis mutandis to various criteria for selecting data.

The training dynamics prediction model 120 with some data selected is labeled with respective classes for the selected data (230). According to an example embodiment, the electronic apparatus may acquire a result of labeling the selected data with the corresponding class by requesting one or more workers to determine which class the selected data belongs to. However, this is only an example, and depending on the example embodiment, the labeled result for the selected data may be acquired based on a separate computer program and software.

The electronic apparatus 110 trains the classification model 110 and the training dynamics prediction model 120 based on the result of labeling the selected data with the class. According to an example embodiment, the electronic apparatus may merge the result of labeling the selected data with the class into the first dataset (240). In this case, the operation of training the classification model 110 and the training dynamics prediction model 120 based on the result of labeling the selected data with the class may include an example embodiment in which the electronic apparatus merges the result of labeling the selected data with the class into the first dataset to generate a new first dataset and performs operation 210 again based thereon. In this regard, the electronic apparatus according to an example embodiment may perform operation 210 using the merged result as a new first dataset, and then perform at least some of operations 220, 230, and 240 again. Further, when performing operation 240 again, the electronic apparatus merges the result in which the newly selected data is labeled with the class into the first dataset again to generate a new first dataset once again, and then the electronic apparatus may perform operation 210 once again based thereon. As described above, the electronic apparatus according to an example may train the classification model 110 by repeatedly performing (e.g., by performing for each epoch) at least some of operations 210 to 240 while merging the classified data into the first dataset.

Hereinafter, for convenience of description, with reference to the case of repeatedly performing at least some of operations 210 to 240, the n-th time of which at least some of operations 210 to 240 is performed is referred to as the n-th epoch. For example, when operations 210 to 240 are performed for the first time, it is referred to as the first epoch, when at least some of operations 210 to 240 are performed for the second time, it is referred to as the second epoch, and so on. The criterion for transitioning to a new epoch may be the time when the classified data is merged into the first dataset. In addition, the epoch in the above description (e.g., the epoch in Equations 1, 2, 4, etc.) may also be understood in terms of the n-th epoch being the time when at least some of operations 210 to 240 are performed for the n-th time.

Of course, the timing of the transition to the new epoch is set only for convenience of calculation, and in fact, the starting point and the ending point of the epoch may be set according to various criteria.

Meanwhile, the criterion for stopping the repetition may be set in various ways. There are various example embodiments such as terminating the operation when the classification accuracy of the classification model 110 achieves a goal, or terminating the operation when the epoch reaches a certain value, for example. In addition, depending on the example embodiment, at least some of operations 210 to 240 may be repeated infinitely as long as the computing power allows.

FIG. 4 is an exemplary diagram illustrating a specific operation of training a model using a model training system according to an example embodiment.

An example embodiment of the present disclosure may include a description of a training dynamics prediction model that is a new active learning method. To this end, a training dynamics prediction model 120 that defines the training dynamics and learns the training dynamics of a given sample (data) may be described. Then, an example of an objective function for training a classification model 110 and the training dynamics prediction model 120 may be described. Based on the output of the trained classification model 110 and the training dynamics prediction model 120, examples of query strategies for quantifying data uncertainty for selecting uncertain data from a pool in which classes are not specified may be introduced below.

Hereinafter, the description of the disclosure may be made focusing on the uncertainty-based active learning for solving the multi-class classification problem. However, the scope of the present disclosure is not limited thereto.

Referring to FIG. 4, operation 400 of the model training system 100 at the t-th epoch is shown according to an example embodiment. More specifically, the electronic apparatus may input one or more data included in the first dataset into the classification model 110 and acquire classification information as a result.

The classification model 110 may be trained to generate predicted probability vector $\hat{y}$ and predicted class $\hat{y}$. For arbitrary data $x$ included in the first dataset, the classification information (predicted probability vector $\hat{y}$) acquired as a result of input into the classification model 110 may be calculated as in Equation 7 below (this may correspond to a part of the classification information).

[Equation 7]

$$\widehat{\mathbf{y}} = [p(y=1|x), p(y=2|x), \ldots, p(y=C|x)],$$

$\hat{y}$ may correspond to the output of the classification model 110 for data $x$.

In this case, predicted class $\hat{y}$ of data $x$ is a class corresponding to the probability having the largest value among the probabilities for each class included in the classification information, which may be calculated as in Equation 8 below.

[Equation 8]

$$\widehat{y} = \mathrm{argmax}_i \; p(i|x)$$

Meanwhile, in the t-th epoch, Equation 7 may be expressed as Equation 9 below, and Equation 8 may be expressed as Equation 10 below.

[Equation 9]

$$\widehat{\mathbf{y}}^{(t)} = [p^{(t)}(y=1|x), p^{(t)}(y=2|x), \ldots, p^{(t)}(y=C|x)]$$

[Equation 10]

$$\widehat{y}^{(t)} = \mathrm{argmax}_i \; p^{(t)}(i|x)$$

$\hat{y}^{(t)}$ may correspond to the output of the classification model 110 for data $x$ in the t-th epoch, and $\hat{y}^{(t)}$ may correspond to the predicted class of data $x$ predicted by the classification model 110 in the t-th epoch.

A cycle of the uncertainty-based active learning may include: (i) training the classification model 110 on a class-specified dataset D; and (ii) selecting the top k uncertain data samples from a class-unspecified data pool D'. The selected data is then labeled to increase the size of D (which may be done by a human annotator) and revert back to the first operation to be repeated. Many active learning methods may utilize additional models, such as loss prediction or variational auto-encoders, to select the most useful data. Training dynamics provide important clues to understanding the contribution of each data sample, but current uncertainty-based active learning methods have limitations in that they do not utilize this wealth of information to estimate data uncertainty of class-unspecified data.

Meanwhile, in relation to the present disclosure, as described above, the first dataset may include one or more pre-labeled data, and a pre-labeled true class for data $x$ may be referred to as Y. In this case, the electronic apparatus may acquire loss information based on the predicted class of data $x$ predicted by the classification model 110 and true class $y$ which is pre-labeled. This may be understood to include an example embodiment which compares a pre-labeled class for each single data with respect to the training data included in the first dataset and the classification information described above in FIG. 2.

Reference numeral 410 may be an example illustrating an operation of acquiring loss information based on the output of the classification model 110 for data *x* and true class *y* in the t-th epoch. According to an example, the electronic apparatus may acquire a cross-entropy loss value based on the output of the classification model 110 and true class *y*. Equation 11 for acquiring the cross-entropy loss may be as follows.

[Equation 11]

$$\mathcal{L}_{\mathrm{CE}}(\widehat{\mathbf{y}}^{(t)}, \mathbf{y}) = -\log p^{(t)}(y|x)$$

According to an example, the classification model 110 may be trained in a direction in which $\mathcal{L}_{\mathrm{CE}}$ on average is minimized.

According to another example, the electronic apparatus may determine, based on the classification information, a class to which the training data included in the first dataset is most likely to belong, and check whether the determined class matches the pre-labeled class to check whether the classification information matches the pre-labeled class. For example, instead of calculating the cross-entropy loss as described above, the electronic apparatus may simply check whether $\hat{y}^{(t)}$ matches true class *y* and train the classification model 110 based thereon.

In addition, various methods may be applied to train the classification model 110.

Since the electronic apparatus acquires the output of the classification model 110 for data *x* for each epoch for training the classification model 110, training dynamics may be calculated with a small amount of computation (since there is no need to separately calculate the probability value for each class for each epoch). In this regard, according to an example, based on a plurality of pieces of classification information acquired and accumulated by repeatedly performing the first operation, target training dynamics information may be acquired by calculating the average values of the probability of data belonging to each class (the plurality of pieces of classification information may include information acquired based on the classification model 110).

Reference numeral 420 may be an example of calculating the training dynamics in the t-th epoch, calculating the predictive training dynamics using the training dynamics prediction model 120, and training the training dynamics prediction model 120 based on the calculated values. Equation 12 for calculating the training dynamics corresponding to data *x* according to an example may be defined as follows (this may correspond to a part of the target training dynamics information).

[Equation 12]

$$\bar{\mathbf{y}}^{(t)} = [\bar{p}^{(t)}(y = 1|x), \bar{p}^{(t)}(y = 2|x), \dots, \bar{p}^{(t)}(y = C|x)]$$

$\bar{y}^{(t)}$ may be the training dynamics established with respect to data *x* in the t-th epoch.

With respect to the specific calculation of each component of the training dynamics, $\bar{p}^{(t)}(y|x)$ may be calculated as in Equation 13 below.

[Equation 13]

$$\bar{p}^{(t)}(y|x) = \sum_i p^{(i)}(y|x)\Delta t \simeq \sum_{i=1}^{t} p^{(i)}(y|x)/t$$

According to an example embodiment, the training dynamics may be defined by various equations in which the training dynamics prediction model 120 can be appropriately trained, and it is not limited to the above Equations 12 and 13. However, for convenience of explanation, an example embodiment in which training dynamics is calculated based on Equations 12 and 13 will be described below.

An example embodiment of the present disclosure may aim to predict uncertainty by utilizing training dynamics of class-unspecified data. Equation 13 may correspond to an area under the prediction of each data *x* acquired during t epochs for optimizing the classification model 110.

$\bar{y}^{(t)}$ may encapsulate the training dynamics of data prediction $\hat{y}^{(t)}$ by summing the areas under prediction. According to an example embodiment, when the classification model 110 is generally confident of prediction result $\hat{p}^{(i)}(y|x)$ of data *x* during training, the value of $\bar{p}^{(t)}(y|x)$ may increase. In the opposite case, the value of $\bar{p}^{(t)}(y|x)$ may decrease. That is, from the point of view of the classification model 110, easy samples may represent relatively higher

$\bar{p}^{(t)}$, compared to hard samples having the same prediction probability $\bar{p}^{(t)}(y|x)$ at the end of the cycle. Assuming that the training dynamics can be captured in the prediction domain, $\bar{y}^{(t)}$ may be employed as the training dynamics to predict the data uncertainty.

The electronic apparatus may calculate predictive training dynamics corresponding to data $x$ based on the training dynamics prediction model 120. Equation 14 for calculating the predictive training dynamics may be defined as follows (this may correspond to a part of predictive training dynamics information).

[Equation 14]

$$\tilde{\mathbf{y}}^{(t)} = [p_m^{(t)}(y = 1|x), p_m^{(t)}(y = 2|x), \dots, p_m^{(t)}(y = C|x)$$

$\tilde{y}^{(t)}$ may be the predictive training dynamics calculated by the training dynamics prediction model 120 in relation to data $x$ in the t-th epoch. $p_m^{(t)}(y = 1|x)$ may correspond to the output generated when data $x$ is input to the training dynamics prediction model 120. Alternatively, $p_m^{(t)}(y = 1|x)$ may be calculated by a method corresponding to Equation 13 based on the output generated when data $x$ is input to the training dynamics prediction model 120, or may be calculated based on various other example embodiments.

Since the predictive training dynamics information is information acquired based on pre-labeled data, it may be possible to acquire loss information without an excessive amount of computation.

As mentioned above, tracking training dynamics on large class-unspecified data D' may not be computationally feasible as it requires model inference on all class-unspecified data for every training epoch. Therefore, as shown in FIG. 4, it may be an effective method to efficiently predict the training dynamics of class-unspecified data in the t-th epoch based on the training dynamics prediction model 120 according to an example embodiment of the present disclosure. In relation to Equation 12 described above, $\bar{y} \in [0, 1]^C$ according to an example embodiment, and $[0, 1]^C$ may be a C-dimensional probability vector. Accordingly, in relation to Equation 14, $\tilde{y}^{(t)}$ according to an example embodiment may belong to $[0, 1]^C$.

There may be various example embodiments in the design of the training dynamics prediction model 120, but an example of adopting the architecture of the loss prediction model excluding the last layer will be described below for convenience of description. The electronic apparatus may output $\tilde{y}^{(t)} \in [0, 1]^C$, which is a C predictor, using a fully-connected layer with softmax activation. Similar to the loss prediction model, the training dynamics prediction model 120 may be provided by extracting one or more hidden feature maps of the classification model 110. In this regard, in order to acquire predictive training dynamics information, the electronic apparatus may acquire hidden feature information on the training data based on the classification model 110, and acquire predictive training dynamics information based on the hidden feature information.

As described above, according to an example embodiment, a cross-entropy loss function may be used for training the classification model 110 (see Equation 11).

The training dynamics prediction model 120 may be trained in a direction to minimize the difference between predictive training dynamics $\tilde{y}$ and actual training dynamics $\bar{y}$ acquired by the classification model 110. According to an example, the electronic apparatus may acquire a Kullback-Leibler divergence value based on the training dynamics and the predictive training dynamics. Equation 15 for acquiring the Coolback-Leibler divergence may be as follows.

[Equation 15]

$$\mathcal{L}_{\mathrm{KL}}(\bar{\mathbf{y}}^{(t)}||\tilde{\mathbf{y}}^{(t)}) = \sum_{i=1}^{C} \bar{p}^{(t)}(y = i|x) \log \left( \frac{\bar{p}^{(t)}(y = i|x)}{p_m^{(t)}(y = i|x)} \right)$$

According to an example, the training dynamics prediction model 120 may be trained in a direction to minimize $\mathcal{L}_{\mathrm{KL}}$ on average.

Unlike $\mathcal{L}_{\mathrm{CE}}$ for convergence to fixed true class $y$, $\mathcal{L}_{\mathrm{KL}}$ may aim for convergence to moving $\bar{y}^{(t)}$, i.e., real training dynamics. Therefore, the stable nature of training dynamics may be more conducive to training.

Meanwhile, depending on the example embodiment, at least one of the classification model 110 and the training dynamics prediction model 120 may be trained in consideration of both the loss information acquired based on the output of the classification model 110 for data *x* and true class *y* (associated with the first loss information described above), and the loss information acquired based on the training dynamics and the predictive training dynamics (associated with the second loss information described above). For example, the classification model 110 and the training dynamics prediction model 120 may be trained in a direction in which the sum of $\mathcal{L}_{\mathrm{CE}}$ and $\mathcal{L}_{\mathrm{KL}}$ is minimized on average, and the sum of $\mathcal{L}_{\mathrm{CE}}$ and $\mathcal{L}_{\mathrm{KL}}$ according to an example may be calculated by Equation 16 below.

[Equation 16]

$$\mathcal{L} = \mathcal{L}_{\mathrm{CE}} + \lambda \mathcal{L}_{\mathrm{KL}}$$

$\lambda$ may correspond to a balancing factor for adjusting the rate considering $\mathcal{L}_{\mathrm{CE}}$ and $\mathcal{L}_{\mathrm{KL}}$ in training. That is, the sum of $\mathcal{L}_{\mathrm{CE}}$ and $\mathcal{L}_{\mathrm{KL}}$ may be understood as a concept encompassing values calculated in consideration of the ratio, rather than being limited to simply $\mathcal{L}_{\mathrm{CE}} + \mathcal{L}_{\mathrm{KL}}$. In addition, although it has been described as

$$\mathcal{L}_{\mathrm{CE}} + \lambda \mathcal{L}_{\mathrm{KL}}$$ for convenience of description, the sum may be calculated based on various formulas,

such as $\mathcal{L}_{\mathrm{KL}} + \lambda \mathcal{L}_{\mathrm{CE}}$, $\lambda_1 \mathcal{L}_{\mathrm{KL}} + \lambda_2 \mathcal{L}_{\mathrm{CE}}$, etc. depending on example embodiments.

As the training dynamics prediction model 120 is trained in this way, it is possible to predict the training dynamics value without an excessive amount of computation, and accordingly, it is possible to efficiently determine data from which a labeling result is acquired for training the classification model 110.

In the data selection phase, instead of using the classification model 110 and output $\hat{y}$, the uncertainty of the class-unspecified data sample may be predicted using the trained training dynamics prediction model 120. The uncertainty of the given data can be predicted using output $\tilde{y}$ of the training dynamics prediction model 120. $\tilde{y}$ may aim to simulate $\bar{y}$ which is the area under prediction Y. In order to calculate the data uncertainty, the entropy and margin may be calculated based on the methods of Equations 1 to 6 and/or various other methods (in addition, various indicators for estimating uncertainty may be calculated).

According to an example of Equation 3, the uncertainty of Y may be predicted by directly using the entropy of $\tilde{y}$. The entropy can be maximized when $\tilde{y}$ is uniform (see, for example, $\hat{H}$ of Equation 3). When the entropy is maximized, it may mean that the training dynamics prediction model 120 predicts that $\hat{y}$ is uniform. That is, when the entropy is maximized, it may be determined that data is uncertain with respect to the classification model 110.

Unlike the entropy, calculating the margin according to Equations 4 and 5 may require actual class *y* to calculate a score. Accordingly, in some example embodiments, it may be inappropriate to calculate the margin according to Equations 4 and 5. In this case, the margin may be calculated based on a method using predicted class $\hat{y}$ of the classification model 110 (see, for example, $\hat{M}(\tilde{y},\hat{y})$ of Equation 6).

In summary, it can be determined that the larger the entropy and the smaller the margin, the higher the uncertainty of the data.

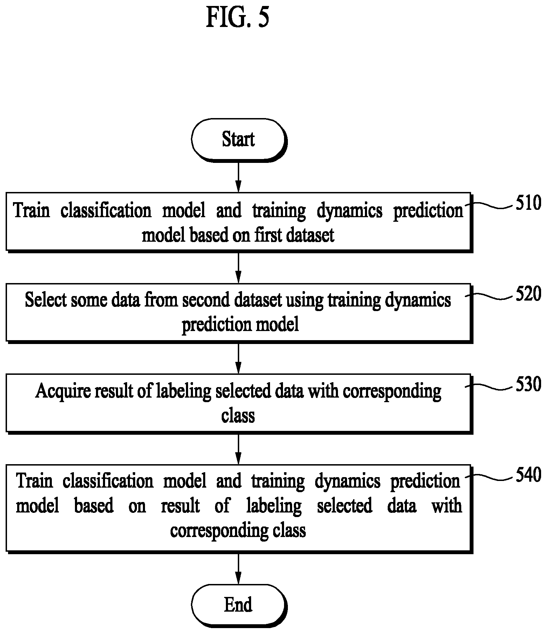

FIG. 5 is a flowchart illustrating a method for training a model according to an example embodiment.

Referring to FIG. 5, a classification model 110 and a training dynamics prediction model 120 are trained based on a first dataset according to an example embodiment (510). The first dataset includes one or more data pre-labeled with a class. According to an example embodiment, the classification model 110 may be trained by acquiring classification information corresponding to the training data included in the first dataset based on the classification model 110, and acquiring loss information reflecting the classification information and the result of comparing the training data included in the first dataset with the class.

In relation to operation 510, classification information on the training data included in the first dataset may be acquired based on the classification model 110 during a current epoch, target training dynamics information may be acquired based on the classification information (acquired during current epoch) and one or more classification information acquired based on the classification model 110 in one or more previous epoch, predictive training dynamics information on the training data may be acquired (during the current epoch) based on the training dynamics prediction model, and the training dynamics prediction model may be trained based on the target training dynamics information (may be acquired from the current epoch and the one or more previous epoch) and the predictive training dynamics information. In this regard, the classification information may include a result of calculating, for each of a plurality of classes, a probability of data belonging to that class.

Using the training dynamics prediction model 120, some data are selected from a second dataset (520). The second dataset includes one or more data not pre-labeled with a class. The selected data may be used again for training of the classification model 110 and the training dynamics prediction model 120 in operation 540 to be described later after a labeling result is acquired in operation 530 to be described later.

For data selected using the training dynamics prediction model 120, a result of labeling with a corresponding class is acquired (530). The labeling result may be acquired by, for example, requesting one or more workers to determine which class the data belongs to, but the labeling method is not limited thereto.

The classification model 110 and the training dynamics prediction model 120 are trained based on the result of labeling the selected data with the class (540). According to an example embodiment, the result of labeling the selected data with the corresponding class is merged into the first dataset to generate a new first dataset, and the classification model 110 and the training dynamics prediction model 120 may be trained based thereon.

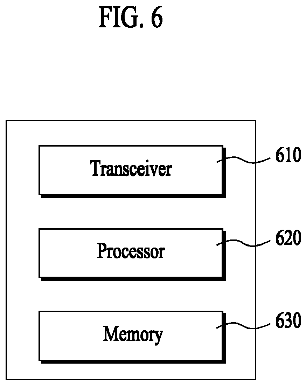

FIG. 6 is an exemplary diagram of a configuration of an electronic apparatus for training a model according to an example embodiment.

Referring to FIG. 6, the electronic apparatus includes a transceiver 610, a processor 620, and a memory 630. The electronic apparatus 110 is connected with the classification model 110, the training dynamics prediction model 120, and other external devices through the transceiver 610, and may exchange data therewith.

The processor 620 may include at least one apparatus described above with reference to FIGS. 1 to 5, or it may perform at least one method described above with reference to FIGS. 1 to 5. The memory 630 may store information for performing at least one method described above with reference to FIGS. 1 to 5. The memory 630 may be a volatile memory or a non-volatile memory.

The processor 620 may control the electronic apparatus 110 to execute a program and provide information. The code of the program executed by the processor 620 may be stored in the memory 630.

Also, the electronic apparatus 110 according to an example embodiment may further include an interface capable of providing a user with information, and may receive an input from a user based thereon.

Example embodiments of the present disclosure have been disclosed in the present specification and drawings. Although specific terms are used, these are only used in general meaning to easily explain the technical content of the present disclosure and to aid understanding of the present disclosure, but not intended to limit the scope of the present disclosure. It is obvious to those skilled in the art that other modified examples based on the technical idea of the present disclosure can be implemented in addition to the example embodiments disclosed herein.

The electronic apparatus or terminal according to the above-described example embodiments may include a processor, a memory for storing and executing program data, a permanent storage such as a disk drive, a communication port for communicating with an external device, a user interface device such as a touch panel, a key, a button, or the like. Methods implemented as software modules or algorithms may be stored on a computer-readable recording medium as computer-readable codes or program instructions executable on the processor. Here, the computer-readable recording medium may include a magnetic storage medium (e.g., ROM (read-only memory), RAM (random-access memory), floppy disk, hard disk, etc.) and optical reading medium (e.g., CD-ROM and DVD (Digital Versatile Disc)). The computer-readable recording medium may be distributed over networked computer systems, so that computer-readable codes can be stored and executed in a distributed manner. The medium may be readable by a computer, stored in a memory, and executed on a processor.

The present example embodiment can be represented by functional block configurations and various processing steps. These functional blocks may be implemented with various numbers of hardware or/and software configurations that perform specific functions. For example, the example embodiment may employ an integrated circuit configuration such as memory, processing, logic, look-up table, or the like, capable of executing various functions by control of one or more microprocessors or other control devices. Similarly, components can be implemented with software programming or software elements, and this example embodiment includes various algorithms implemented with a combination of data structures, processes, routines or other programming components and may be implemented with a programming or scripting language including but not limited to C, C++, Java, assembler, Python, etc. Functional aspects can be implemented with an algorithm running on one or more processors. In addition, the present example embodiment may employ a conventional technique for at least one of electronic environment setting, signal processing, and/or data processing. Terms such as "mechanism", "element", "means", and "composition" can be used in a broad sense, and are not limited to mechanical and physical configurations. Those terms may include the meaning of a series of routines of software in connection with a processor or the like.

The above-described example embodiments are merely examples, and other example embodiments may be implemented within the scope of the claims to be described later.

**Claims**

1. A computer-implemented method for training a training dynamics prediction model, the method comprising:

acquiring, based on a classification model (110), classification information on training data included in a first dataset;
acquiring, based on the classification information and a set of one or more classification information acquired based on the classification model (110) in one or more previous epochs, target training dynamics information;
acquiring, based on the training dynamics prediction model, predictive training dynamics information on the training data; and
training, based on the target training dynamics information and the predictive training dynamics information, the training dynamics prediction model (120).

2. The computer-implemented method of claim 1, wherein training the training dynamics prediction model (120) includes acquiring loss information based on the target training dynamics information and the predictive training dynamics information.

3. The computer-implemented method of claim 2, wherein acquiring the loss information includes acquiring a Kullback-Leibler divergence value based on the target training dynamics information and the predictive training dynamics information.

4. The computer-implemented method of any of the previous claims, wherein the first dataset includes one or more data pre-labeled with a class.

5. The computer-implemented method of claim 4, further comprising training the classification model (110) based on the classification information and the pre-labeled class on the training data included in the first dataset.

6. The computer-implemented method of claim 4 or 5, wherein training the training dynamics prediction model (120) includes acquiring loss information based on the classification information and the pre-labeled class on the training data included in the first dataset.

7. The computer-implemented method of claim 6, wherein acquiring the loss information includes acquiring a cross-entropy loss value based on the classification information and the pre-labeled class.

8. The computer-implemented method of any of the previous claims, wherein acquiring the target training dynamics information includes calculating, based on the classification information and the one or more classification information acquired based on the classification model (110) in one or more previous epochs, average values of probability of data belonging to each class.

9. A computer-implemented method for training a classification model (110) for outputting a classification result corresponding to input data, the method comprising:

a first operation (510) of training, based on a first dataset, the classification model (110) and a training dynamics prediction model (120);
selecting (520), using the training dynamics prediction model (120), some data from a second dataset;
acquiring (530) a result of labeling the selected data with a corresponding class; and
a second operation (540) of training, based on the result of labeling the selected data with the corresponding class, the classification model (110) and the training dynamics prediction model (120),
wherein, the first dataset includes one or more data pre-labeled with a class, and
the second dataset includes one or more data not pre-labeled with a class.

10. The computer-implemented method of claim 9, wherein the first operation includes:

acquiring, based on the classification model (110), target training dynamics information corresponding to training data included in the first dataset;
acquiring, based on the training dynamics prediction model (120), predictive training dynamics information corresponding to the training data included in the first dataset; and
acquiring, based on the target training dynamics information and the predictive training dynamics information, loss information.

11. The computer-implemented method of claim 10, wherein training the classification model (110) and the training dynamics prediction model (120) includes acquiring a Kullback-Leibler divergence value based on the target training dynamics information and the predictive training dynamics information.

12. The computer-implemented method of claim 10 or 11, wherein acquiring the predictive training dynamics information includes:

    acquiring, based on the classification model (110), hidden feature information on the training data; and
    acquiring, based on the hidden feature information, the predictive training dynamics information.

13. The computer-implemented method of any of the claims 9 to 12, wherein the second operation includes:

    merging the result of labeling the selected data with the corresponding class into the first dataset; and
    performing the first operation again using the merged result as a new first dataset.

14. A non-transitory computer-readable storage medium comprising instructions which, when executed by a computer, cause the computer to carry out the method of any of the claims 1 to 13.

15. An electronic apparatus for training a training dynamics prediction model comprising:

    a transceiver (610);
    a memory (630) configured to store instructions; and
    a processor (620), wherein the processor (620) is connected with the transceiver (610) and the memory (630) and configured to:

        acquire, based on a classification model (100), classification information on training data included in a first dataset;
        acquire, based on the classification information and a set of one or more classification information acquired based on the classification model (110) in one or more previous epochs, target training dynamics information;
        acquire, based on the training dynamics prediction model (120), predictive training dynamics information on the training data; and
        train, based on the target training dynamics information and the predictive training dynamics information, the training dynamics prediction model (120).

# FIG. 1

100

110

120

| Classification Model | ← → | Training Dynamics Prediction Model |

# FIG. 2

200

FIG. 3A

FIG. 3C

EP 4 242 940 A1

FIG. 3D

Uncertain Sample

Training Dynamics Prediction Model

120

Predict

$\overline{y}$

Time

Actual Training Dynamics

EP 4 242 940 A1

# FIG. 4

# FIG. 5

```
            ┌─────────────┐
            │    Start     │
            └──────┬──────┘
                   │
                   ▼
┌──────────────────────────────────────────┐
│ Train classification model and training   │──~510
│ dynamics prediction model based on first  │
│ dataset                                    │
└──────────────────┬───────────────────────┘
                   │
                   ▼
┌──────────────────────────────────────────┐
│ Select some data from second dataset      │──~520
│ using training dynamics prediction model  │
└──────────────────┬───────────────────────┘
                   │
                   ▼
┌──────────────────────────────────────────┐
│ Acquire result of labeling selected data  │──~530
│ with corresponding class                   │
└──────────────────┬───────────────────────┘
                   │
                   ▼
┌──────────────────────────────────────────┐
│ Train classification model and training   │──~540
│ dynamics prediction model based on result │
│ of labeling selected data with            │
│ corresponding class                        │
└──────────────────┬───────────────────────┘
                   │
                   ▼
            ┌─────────────┐
            │     End      │
            └─────────────┘
```

# FIG. 6

Transceiver — 610

Processor — 620

Memory — 630

| Europäisches Patentamt European Patent Office Office européen des brevets | **EUROPEAN SEARCH REPORT** | **Application Number** EP 23 15 9854 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIKE ZHANG ET AL: "Cartography Active Learning", ARXIV.ORG, CORNELL UNIVERSITY LIBRARY, 201 OLIN LIBRARY CORNELL UNIVERSITY ITHACA, NY 14853, 9 September 2021 (2021-09-09), XP091053823, * section 1; page 1 * * sections 3-4; page 2 - page 4 * ----- | 1-15 | INV. G06N20/00 |
| T | SEONG MIN KYE ET AL: "TiDAL: Learning Training Dynamics for Active Learning", ARXIV.ORG, CORNELL UNIVERSITY LIBRARY, 201 OLIN LIBRARY CORNELL UNIVERSITY ITHACA, NY 14853, 13 October 2022 (2022-10-13), XP091342742, ----- | | |

|  |  |  | TECHNICAL FIELDS SEARCHED (IPC) |
|---|---|---|---|
|  |  |  | G06N |

The present search report has been drawn up for all claims

| Place of search | Date of completion of the search | Examiner |
|---|---|---|
| Munich | 21 June 2023 | Maghroum, Walid |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220028825
- KR 1020220105602
- KR 20210006502 A
- KR 102229853 B1